# EUROPÄISCHE PATENTSCHRIFT

(11) **EP 0 622 734 B1**
(45) Veröffentlichungstag und Bekanntmachung des Hinweises auf die Patenterteilung: **04.06.1997**
(21) Anmeldenummer: 94105108.8
(22) Anmeldetag: 31.03.1994
(51) Int. Cl.: G06F 11/00

(54) **Schnittstelle**
Interface
Interface

(30) Priorität: 29.04.1993 DE 4314058
(43) Veröffentlichungstag der Anmeldung: 02.11.1994
(73) Patentinhaber: Bayerische Motoren Werke Aktiengesellschaft, 80788 München (DE)
(72) Erfinder: Froeschl, Joachim, D-82211 Herrsching (DE); Ranzinger, Günter, D-85748 Garching (DE); Schneider, Josef, D-85250 Altomuenster (DE)

(56) Entgegenhaltungen:
- EP-A- 0 328 235
- US-A- 4 745 542

## Beschreibung

Die Erfindung bezieht sich auf eine Schnittstelle zwischen einem zentralen Steuergerät und einem davon ge steuerten Peripheriegerät.

Derartige Schnittstellen sind beispielsweise in Kraftfahrzeugen allgemein üblich. Dabei geht die Entwicklungstendenz dahin, derartige Schnittstellen komplex aufzubauen, um eine Vielzahl von Informationen zwischen dem Steuergerät und dem Peripheriegerät auszutauschen. Damit verbunden ist ein erheblicher schaltungstechnischer Aufwand, der sich seinerseits in einer erhöhten Störanfalligkeit niederschlägt. So geht es bei einer aus der DE 38 26 774 A bekannten Schnittstelle der eingangs genannten Art darum, die aus mindestens zwei Busleitungen bestehende Schnittstelle mit wenigstens zwei errechneten Größen auf Funktionsfähigkeit zu überwachen und ggf. über eine Notlaufschaltung bei Ausfall eines Teilnehmers oder einer Busleitung den Datenverkehr auch noch mit nur einer betriebsbereiten Busleitung aufrecht zu erhalten. Derartige Schnittstellen sind zudem mit hohen Kosten verbunden.

Der Erfindung liegt die Aufgabe zugrunde, eine Schnittstelle der eingangs genannten Art zu schaffen, bei der auf einfache und kostengünstige Weise ein Datenverkehr zwischen einem zentralen Steuergerät und einem Peripheriegerät und ein Betrieb des Peripheriegeräts durch das Steuergerät möglich ist.

Die Erfindung löst diese Aufgabe durch die kennzeichnenden Merkmale des Patentanspruchs 1.

Zum Betrieb des Peripheriegeräts ist lediglich erforderlich, eine Synchronisation zwischen den beiden Geräten herzustellen. Der hierfür erforderliche Aufwand ist gering und mit einfachen und störsicheren Bauteilen realisierbar. Nur wenn eine Synchronisation nicht zustande kommt, bleibt das Peripheriegerät ausgeschaltet. Die Ursache eines derartigen Fehlers kann sowohl im Steuergerät als auch im Peripheriegerät oder in der Übertragungsstrecke liegen. Im ersteren Fall sorgt das Peripheriegerät durch eine vorhandene Sicherheitseinrichtung dafür, daß es nicht eingeschaltet wird. Im letzteren Fall, d.h. wenn der Fehler offensichtlich im Peripheriegerät liegt, sorgt das Steuergerät selbst dafür, daß das Peripheriegerät nicht einen Einschaltbefehl erhält. Beide Möglichkeiten setzen nur einen sehr geringen Aufwand für die Erkennung der bestehenden Synchronisation zwischen Steuer- und Peripheriegerät voraus. Die hierfür notwendigen Schaltelemente zeichnen sich ebenfalls durch eine geringe Störanfälligkeit aus.

Bei Bestehen der Synchronisation zwischen den beiden Geräten kann das Peripheriegerät auf schaltungstechnisch besonders einfache Weise mit den Mitteln geschaltet werden, die im Patentanspruch 2 angegeben sind. Auch hierfür gilt, daß der schaltungstechnische Aufwand gering und wenig störanfällig ist. Dasselbe gilt, wenn das Verhältnis der Taktfrequenzen ein beliebiges Vielfaches ist.

In den Patentansprüchen 3 und 4 sind Möglichkeiten angegeben, zusätzlich eine bzw. mehrere Werteinformationen vom Peripherie zum Steuergerät zu übertragen.

Die Übertragung einer Fehlerinformation läßt sich mit den Mitteln besonders leicht realisieren, die im Patentanspruch 5 angegeben sind. Schließlich zeigt tentanspruch 6 eine Möglichkeit, einen Fehler des Peripheriegeräts beispielsweise zu Diagnosezwecke sichtbar zu machen.

In der Zeichnung ist ein Ausführungsbeispiel der Erfindung dargestellt. Es zeigt
- Fig. 1: den prinzipiellen Aufbau der erfindungsgemäßen Schnittstelle
- Fig.2: in Diagrammen a bis c die Spannungsverhältnisse der Schnittstelle in Fig. 1

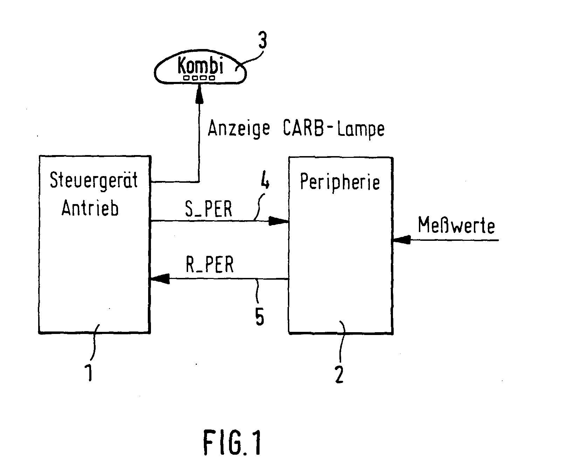

Der in Fig. 1 gezeigt prinzipielle Aufbau besteht aus einem Steuergerät 1 und einem Peripheriegerät 2, wobei das Peripheriegerät 2 durch das Steuergerät 1 ein- und ausschaltbar sowie auf seine Funktionsfähigkeit überprüfbar ist und durch das Peripheriegerät 2 Informationen an das Steuergerät 1 übertragen werden. Eine angedeutete optische Anzeige 3 dient dazu, ggf. einen Fehler des Peripheriegeräts bzw. eines daran angeschlossenen weiteren brauchers optisch zu signalisieren.

Die beiden Geräte 1 und 2 sind über zwei Leitungen 4 und 5 miteinander verbunden, von denen die erste Leitung 4 dazu dient, das Peripheriegerät zu schalten und einen Synchronisationstakt vorzugeben, während die Leitung 5 dazu dient, die erfolgte Synchronisation des Peripheriegeräts an das Steuergerät 1 zurück zu melden, Meß und Informationswerte zu übertragen sowie Aussagen über etwaige Fehler an das Steuergerät 1 zu liefern.

Zur Synchronisation der Geräte 1 und 2 wird bei Einschalten des Steuergeräts 1 durch dieses das Peripheriegerät 2 an das Bordnetz angeschlossen. Das Steuergerät 1 liefert einen Takt mit einer Taktzeit von beispielsweise 50 ms über die Leitung 4 an das Peripheriegerät 2. Sofern die Leitung 4 in Ordnung ist und die Taktfrequenz im Peripheriegerät 2 ankommt, liefert das Peripheriegerät 2 ein Taktsignal mit derselben Taktzeit von 50 ms über die Leitung 5 an das Steuergerät 1 zurück. Im Fehlerfall erhält das Steuergerät 1 über die Leitung 5 ein derartiges Taktsignal nicht zurück. Dies kann verursacht sein durch einen Fehler der Leitung 4. In diesem Fall kommt das Taktsignal nicht im Peripheriegerät 2 an. Dieses ist dann nicht in der Lage, ein synchrones Taktsignal auszugeben. Dasselbe gilt, wenn das Peripheriegerät einen Fehler aufweist. Ist hingegen die Leitung 5 gestört oder unterbrochen, so kommt das Taktsignal, das vom Peripheriegerät 2 ausgegeben wird, beim Steuergerät 1 nicht an. In jedem Fall erkennt das Steuergerät 1, daß die übertragung vom und zum Peripheriegerät nicht ungestört ist. In diesem Fall können durch das Steuergerät beispielsweise Ersatzmaßnahmen eingeleitet werden, die die Funktion des Peripheriegeräts beispielsweise für daran angeschlossene elektrische Verbraucher simulieren.

Erkennt das Steuergerät 1 hingegen, daß der Datenverkehr von und zum Peripheriegerät ungestört möglich ist, so kann das Peripheriegerät im Bedarfsfall eingeschaltet werden. Hierzu kann über die Leitung 4 ein Taktsignal mit doppelter Taktfrequenz, d.h. halber Taktzeit ausgegeben werden. Die Zeit für die Synchronisation der Taktsignale auf den Leitungen 4 und 5 bleibt dabei erhalten. Zum Abschalten des Peripheriegeräts 2 genügt es, wieder die ursprüngliche Taktfrequenz einzustellen. Damit wird es möglich, unter Beibehaltung der Kontrollmöglichkeiten des Steuergeräts über das Peripheriegerät und die in den dazwischen bestehenden Leitungsverbindungen das Peripheriegerät in seinem Schaltzustand zu verändern.

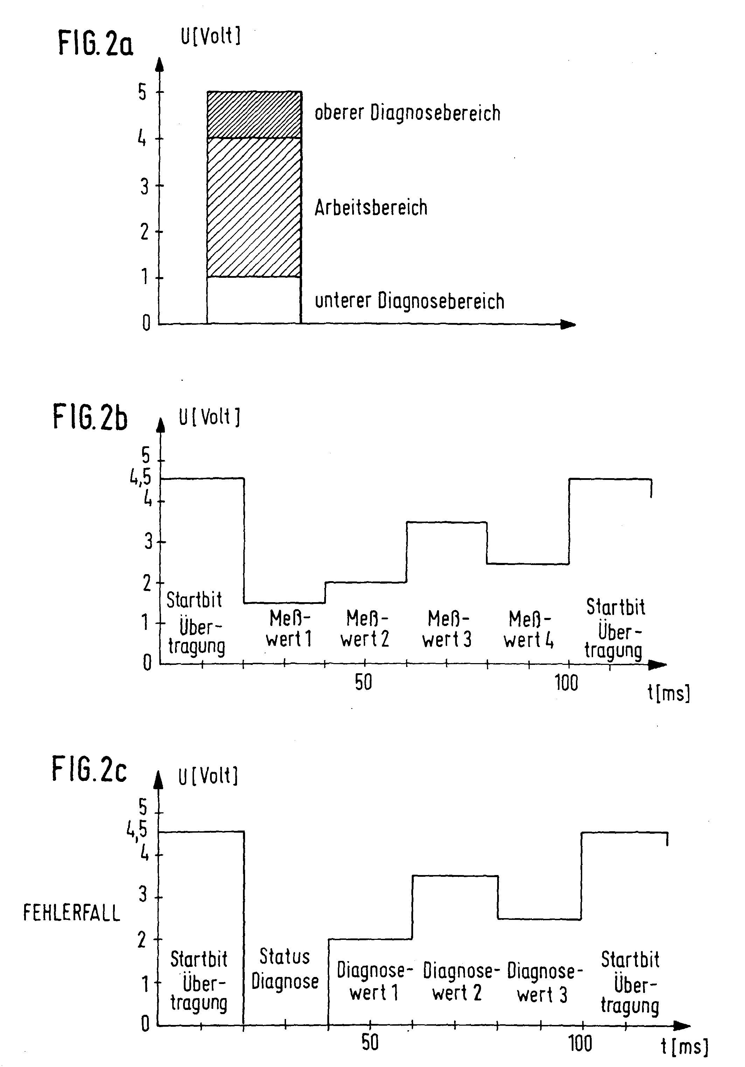

Zusätzlich können über die Leitung 5 auch eine oder mehrere Werteinformationen vom Peripheriegerät 2 an das Steuergerät 1 übertragen werden. Hierzu kann mit einem Spannungspegel auf der Leitung 5 gearbeitet werden, der in verschiedene Bereiche aufgeteilt ist und der beispielsweise die im Diagramm a von Fig. 2 dargestellte Aufteilung aufweist. Der Signalpegel kann einen maximalen Wert von beispielsweise 5 Volt haben. Der Bereich zwischen 0 und 1 sowie zwischen 4 und 5 Volt kann zu Diagnosezwecken verwendet werden. Der dazwischenliegende Bereich zwischen 1 und 4 Volt kann dazu dienen, Werteinformationen zu übertragen.

Letzteres kann in der Form geschehen, wie es im Diagramm b von Fig. 2 dargestellt ist. Dabei lassen sich vier Werteinformationen, beispielsweise über vier voneinander unabhängige Meßwerte vom Peripheriegerät 2 an das Steuergerät 1 übertragen. Die Meßwerte werden beispielsweise durch Geber aufgenommen, die mit dem Peripheriegerät 2 direkt verbunden sind.

Die Übertragung der Werteinformationen über die Leitung 5 erfolgt im Zeitmultiplexverfahren. Nach Ausgabe eines Startbits von 20 ms Länge und einem Pegel von 4,5 V werden die Werteinformationen nacheinander mit jeweils 20 ms Länge übertragen. Nach 100 ms, d.h. synchron mit dem 50 ms-Takt auf der Leitung 4, wird erneut ein Startbit durch das Peripheriegerät 2 ausgegeben und erneut im 20 ms-Zeitfenster die Meßwerte 1 bis 4 übertragen.

Die Größe der Meßwerte ergibt sich aus den Spannungspegeln der zugehörigen Impulse, die durch das Peripheriegerät entsprechend den jeweiligen Meßwerten eingestellt werden. Eventuelle Offset-Fehler in der Übertragungsstrecke vom Peripherie- zum Steuergerät werden anhand des im Steuergerät 1 ankommenden Spannungspegels des Startbits erkannt und korrigiert.

Zusätzlich läßt sich eine Fehlerinformation über die Leitung 5 übertragen. Hierzu wird, wie im Diagramm c von Fig. 2 dargestellt, nach Ausgabe des Startbits eine Diagnose-Status-Information übertragen. Hierzu wird der anschließende Impuls auf den Diagnosespannungspegel von 0 V gesetzt. Über die daran anschließenden drei weiteren Impulse von jeweils 20 ms Länge läßt sich eine Information über die Art bzw. Ursache des vorliegenden Fehlers übertragen. Aus den mit Diagnosewert 1 bis Diagnosewert 3 bezeichneten Spannungspegeln ergibt sich eine codierte Information, aus der das Steuergerät die erforderliche Information ableitet und ggf. Ersatzmaßnahmen veranlaßt.

Damit lassen sich Diagnose-und Werteinformationen vom Peripheriegerät an das Steuergerät übertragen, während gleichzeitig das Steuergerät die volle Kontrolle über das Peripheriegerät behält.

## Patentansprüche

1. Schnittstelle zwischen einem zentralen Steuergerät und einem davon gesteuerten Peripheriegerät wobei die beiden Geräte durch zwei Leitungen miteinander verbunden sind, von denen die erste zur Signalübertragung vom Steuergerät zum Peripheriegerät und die zweite zur Signalübertragung in umgekehrter Richtung dient, dadurch gekennzeichnet, daß die Signalübertragung in beiden Richtungen getaktet und synchronisiert erfolgt und daß das Peripheriegerät eine Einrichtung enthält, die bei fehlender Synchronisation zwischen dem zentralen Steuergerät und dem Peripheriegerät bewirkt, daß das Peripheriegerät nicht eingeschaltet wird.

2. Schnittstellen nach Anspruch 1, dadurch gekennzeichnet, daß durch Verdoppelung der Taktfrequenz auf der ersten Signalleitung das Peripheriegerät ein- bzw. ausschaltbar ist gegenüber dem umgekehrten Schaltbefehl bei der ursprünglichen Taktfrequenz.

3. Schnittstellen nach Anspruch 1 oder 2, dadurch gekennzeichnet, daß zur Übertragung einer Werteinformation von Peripheriegerät zum Steuergerät die Taktimpulse auf der zweiten Leitung in ihrer Pulsbreite und/oder ihrer Amplitude entsprechend moduliert sind.

4. Schnittstelle nach Anspruch 3, dadurch gekennzeichnet, daß zur Übertragung mehrerer Werteinformationen die entsprechenden Taktimpulse moduliert im Zeitmultiplexverfahren übertragbar sind.

5. Schnittstelle nach einen der Ansprüche 1 bis 4, dadurch gekennzeichnet, daß das Peripheriegerät einen Fehlerzustand an das Steuergerät durch eine vorgegebene Folge von Spannungsimpulsen meldet.

6. Schnittstelle nach einen der Ansprüche 1 bis 5, dadurch gekennzeichnet, daß das Steuergerät einen Fehler des Peripheriegeräts optisch anzeigt.

## Claims

1. An interface between a central control device and a peripheral device controlled thereby, wherein the two devices are interconnected by two lines, the first of which is for transmitting signals from the control device to the peripheral device and the second is for transmitting signals in the reverse direction, characterised in that signal transmission in both directions is clocked and synchronised and in that the peripheral device contains a means which prevents the peripheral device being switched on in the absence of synchronisation between the central control device and the peripheral device.

2. An interface according to claim 1, characterised in that by doubling the clock frequency on the first signal line, the peripheral device can be switched on or off in opposition to the reverse switching command at the original clock frequency.

3. An interface according to claim 1 or 2, characterised in that in order to transmit a value item from the peripheral device to the control device, the clock pulses on the second line can be suitably modulated in width and/or amplitude.

4. An interface according to claim 3, characterised in that in order to transmit a number of value items, the corresponding clock pulses can be transmitted by modulation in the time-multiplex process.

5. An interface according to any of claims 1 to 4, characterised in that the peripheral device reports a fault to the control device by a preset sequence of voltage pulses.

6. An interface according to any of claims 1 to 5, characterised in that the control device optically displays a fault in the peripheral device.

## Revendications

1. Interface entre un appareil de commande centrale et un appareil périphérique commandé par celui-ci, les deux appareils étant reliés par deux lignes dont la première sert à transmettre les signaux de l'appareil de commande à l'appareil périphérique et la seconde à transmettre les signaux dans le sens inverse,
caractérisée en ce que
la transmission des signaux dans les deux directions se fait de manière cadencée et synchronisée,
l'appareil périphérique comporte une installation qui en cas de défaut de synchronisation entre l'appareil de commande centrale et l'appareil périphérique interdit à l'appareil périphérique d'être mis en oeuvre.

2. Interface selon la revendication 1,
caractérisée en ce qu'
en doublant la fréquence d'horloge dans la première ligne de transmission de signaux, on branche ou on coupe l'appareil périphérique par rapport à l'ordre de commutation inverse pour la fréquence d'horloge d'origine.

3. Interface selon la revendication 1 ou 2,
caractérisée en ce que
pour transmettre une information de valeur entre l'appareil périphérique et l'appareil de commande, on module les impulsions d'horloge de la seconde ligne quant à leur largeur d'impulsion et/ou leur amplitude.

4. Interface selon la revendication 3,
caractérisée en ce que
pour transmettre plusieurs informations de valeurs on module les impulsions d'horloge correspondantes selon un procédé de multiplexage dans le temps.

5. Interface selon l'une des revendications 1 à 4,
caractérisée en ce que
l'appareil périphérique signal un état de défaut à l'appareil de commande par une suite prédéterminée d'impulsions de tension.

6. Interface selon l'une des revendications 1 à 5,
caractérisée en ce que
l'appareil de commande affiche de manière optique un défaut de l'appareil périphérique.
